# FASCICULE DE BREVET EUROPEEN

(11) **EP 2 696 668 B1**
(45) Date de publication et mention de la délivrance du brevet: **26.02.2020**
(21) Numéro de dépôt: 12718301.0
(22) Date de dépôt: 04.04.2012
(51) Int. Cl.: A01C 7/04, A01C 7/08, A01C 7/10

(54) **DISPOSITIF D'ALIMENTATION A DISTANCE POUR SEMOIR MONOGRAINE ET SEMOIR MONOGRAINE UTILISANT UN TEL DISPOSITIF D'ALIMENTATION**
FERNSPEISUNGSVORRICHTUNG FÜR EINE EINZELKORNSÄMASCHINE UND EINZELKORNSÄMASCHINE MIT EINER SOLCHEN VORRICHTUNG
REMOTE FEEDING DEVICE FOR A SINGLE-GRAIN SEED DRILL AND SINGLE-GRAIN SEED DRILL USING SUCH A FEEDING DEVICE

(30) Priorité: 11.04.2011 FR 1153130
(43) Date de publication de la demande: 19.02.2014
(73) Titulaire: KUHN S.A., 67700 Saverne (FR)
(72) Inventeur: AUDIGIE, Jean-Charles, 67330 Bouxwiller (FR)
(74) Mandataire: Esch, Esther Evelyne
(86) Numéro de dépôt international: PCT/FR2012/050729
(87) Numéro de publication internationale: WO 2012/140349

(56) Documents cités:
- EP-A2- 1 886 548
- FR-A1- 2 315 834
- GB-A- 2 302 075
- GB-A- 2 307 680
- US-B1- 6 935 256

## Description

La présente invention se rapporte au domaine technique général du machinisme agricole. L'invention concerne un dispositif d'alimentation pour semoir monograine via un flux d'air à partir d'un réservoir principal contenant du produit, vers au moins un réservoir auxiliaire en fonction de son taux de remplissage, chaque réservoir auxiliaire étant relié audit réservoir principal par un conduit étanche respectif, le nombre de réservoirs auxiliaires correspondant au nombre de distributeurs dudit semoir monograine. L'invention s'applique à un dispositif d'alimentation à distance pour une machine distributrice telle qu'un semoir monograine à distribution pneumatique.

Un tel dispositif d'alimentation est présenté dans la demande FR 2 315 834**.** Ce dispositif d'alimentation permet de transporter du produit tel que des graines à partir d'un réservoir principal vers au moins un réservoir auxiliaire. Le transport du produit est effectué via un flux d'air au travers d'un conduit étanche en fonction de l'état de remplissage du réservoir auxiliaire. Le réservoir auxiliaire présente un dispositif d'échappement d'air implanté sur une de ses parois latérales. Le dispositif d'échappement d'air crée une perte de charge qui décroit en fonction du remplissage du réservoir auxiliaire. Lorsque le réservoir auxiliaire est rempli, la perte de charge est nulle et le transport de graines depuis le réservoir principal est arrêté. Chaque réservoir auxiliaire est donc alimenté individuellement et automatiquement en graines en fonction de son taux de remplissage. Un tel dispositif d'alimentation est notamment utilisé pour un semoir de précision avec une distribution à distance des éléments semeurs. Le fonctionnement de l'alimentation du réservoir auxiliaire via la fuite d'air est tributaire du type de produit à transporter et notamment de la forme du produit permettant d'obstruer le dispositif d'échappement d'air.

Un semoir monograine avec un dispositif selon le préambule de la revendication 1 est connu de US 6 935 256 B1. Les documents GB 2 302 075 A et EP 1 886 548 décrivent des systèmes de régulation qui contrôlent le niveau du produit dans un réservoir à l'aide d'un capteur et d'un clapet pour réguler le flux d'air dans ledit réservoir.

Dans le cas de semoirs comportant un grand nombre d'éléments semeurs, certains réservoirs auxiliaires sont plus éloignés du réservoir principal que d'autres. Ainsi, le flux d'air doit être augmenté pour que les graines soient transportées jusqu'aux réservoirs auxiliaires éloignés, disposés sur les extrémités du bâti. La position en hauteur du réservoir principal et notamment la hauteur du fond du réservoir principal a une influence sur le transport de graines par le flux d'air. Par contre, cette augmentation du flux d'air entraîne un surplus de graines dans les réservoirs auxiliaires proches du réservoir principal qui provoque un débordement du niveau de graines. D'autre part, le flux d'air important peut aussi provoquer la perte de précision de placement des graines dans les lignes de semis. Pour que l'alimentation à distance des réservoirs auxiliaires soit à peu près correcte pour chacun, le nombre de réservoirs auxiliaires doit être limité. Pour que le flux d'air qui embarque les graines soit plus ou moins adapté à chaque réservoir auxiliaire et tout en ayant un nombre de réservoirs auxiliaires plus élevé, il faudrait utiliser deux flux d'air. L'un adapté aux réservoirs auxiliaires proches du réservoir principal et l'autre adapté aux réservoirs auxiliaires éloignés. Une telle adaptation permet d'éviter des avaries pour cause d'un flux d'air trop élevé pour les réservoirs auxiliaires du centre, mais entraîne aussi des coûts supplémentaires.

La présente invention a pour but de remédier aux inconvénients précités. Elle doit notamment proposer un dispositif d'alimentation efficace pour chaque réservoir auxiliaire indépendamment du nombre de réservoir auxiliaire, de sa position par rapport au réservoir principal et quel que soit le produit à transporter.

A cet effet, l'invention propose un dispositif d'alimentation selon la revendication 1.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** montre, vue de côté, une machine distributrice munie d'un dispositif d'alimentation selon la présente invention,
- la **figure 2** représente un réservoir auxiliaire dont le niveau prédéterminé de produit n'est pas atteint,
- la **figure 3** représente un réservoir auxiliaire dont le niveau prédéterminé de produit est atteint,
- la **figure 4** représente un réservoir auxiliaire avec un dispositif de régulation mécanique.

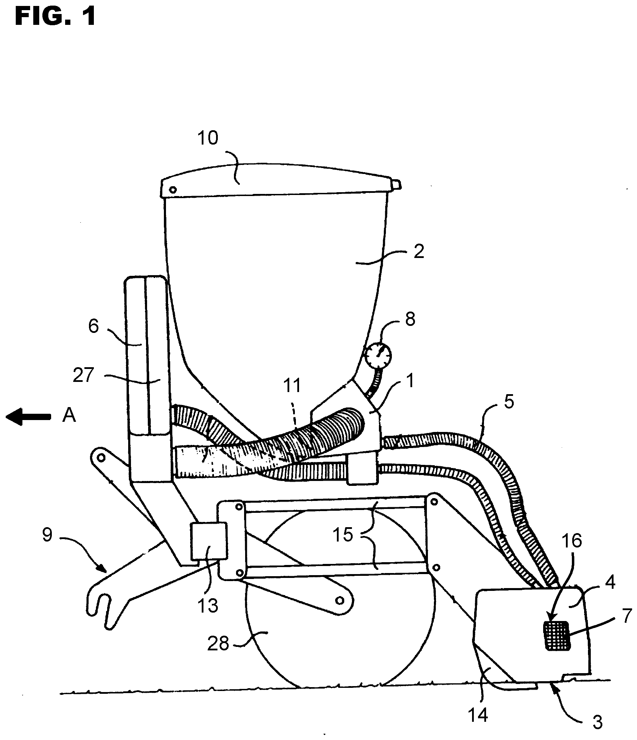

La figure 1 est une vue latérale d'une machine agricole distributrice munie d'un dispositif d'alimentation (1) selon l'invention. La machine présente un réservoir principal (2) destiné à contenir du produit et au moins un distributeur (3) auquel est associé un réservoir auxiliaire (4). Le dispositif d'alimentation (1) permet une alimentation à distance des réservoirs auxiliaires (4) à partir du réservoir principal (2). L'alimentation en produit est réalisée par un flux d'air. Le flux d'air transporte le produit du réservoir principal (2) vers les réservoirs auxiliaires (4). L'alimentation est réalisée de manière individuelle et en fonction du taux de remplissage du réservoir auxiliaire (4). Chaque réservoir auxiliaire (4) étant relié au réservoir principal (2) par un conduit (5) étanche respectif. Le flux d'air pour transporter le produit est fourni par un ventilateur (6). Le débit d'air en entrée du ventilateur (6) est réglable. La sortie d'air du ventilateur (6) est réglable par un dispositif d'échappement d'air (7) disposé à proximité du réservoir auxiliaire (4). Le dispositif d'échappement d'air (7) est une fuite. Le dispositif d'échappement d'air (7) est réalisé sous forme d'ouvertures ménagées dans le réservoir auxiliaire (4). La taille de ces ouvertures est telle que le produit à transporter ne peut pas s'échapper au travers des ouvertures. Le ventilateur (6) fournit un flux d'air sous forme d'air comprimé qui extrait le produit du réservoir principal (2) pour le faire parvenir aux réservoirs auxiliaires (4) par le conduit (5) étanche respectif. L'accumulation de produit dans le réservoir auxiliaire (4) provoque une perte de charge qui ralentit suffisamment le flux d'air dans le conduit (5) étanche pour empêcher le transport du produit. L'alimentation du réservoir auxiliaire (4) est ainsi interrompue, lorsqu'il est plein. Lorsque le réservoir auxiliaire (4) s'est vidé, il n'y a plus accumulation de produit devant le dispositif d'échappement d'air (7), la perte de charge diminue et le transport de produit reprend. Le dispositif d'alimentation (1) permet donc une alimentation autorégulée en fonction du taux de remplissage du réservoir auxiliaire (4). Le dispositif d'alimentation pneumatique est muni d'un manomètre (8).

La machine représentée à la figure 1 présente un cadre d'attelage (9) permettant la liaison à un tracteur (non représenté). Le tracteur déplace la machine suivant un sens d'avance indiqué par la flèche (A). Dans la suite de la description, les notions suivantes "avant", "arrière" et "devant", "derrière" sont définies par rapport au sens d'avance (A). Alternativement, la machine présente un cadre d'attelage intégré à un outil intermédiaire de travail du sol sur lequel sont accrochés des distributeurs (3). Le réservoir principal (2) est muni d'un couvercle (10) et d'une sortie (11) ménagée latéralement en bas. Le couvercle (10) permet une fermeture étanche du réservoir principal (2). Le conduit (5) reliant un réservoir auxiliaire (4) au réservoir principal (2) est flexible. La section du conduit (5) est circulaire.

Une telle machine distributrice est par exemple un semoir (12), lequel est à distribution pneumatique. Il s'agit alors d'un semoir de précision ou monograine. Le produit transporté par le flux d'air est alors des graines. Un tel semoir (12) distribue les graines une à une sur la ligne de semis à des écartements constants. Le semoir (12) comporte un châssis (13) sur lequel sont répartis de manière régulière des distributeurs (3) de graines. Ces distributeurs (3) sont des éléments semeurs. Chaque distributeur (3) possède un réservoir auxiliaire (4) et un organe de mise en terre (14). Le nombre de distributeur correspond au nombre de rangs de semis du semoir monograine. Chaque distributeur (3) est monté sur le châssis (13) au moyen d'un parallélogramme déformable (15) qui lui permet de se déplacer parallèlement au sol. L'organe de mise en terre (14) est réalisé par un soc permettant de mettre les graines dans la terre. Dans une alternative, le distributeur (3) présente deux organes de mise en terre (14). Le rang de semis est alors jumelé.

Selon une importante caractéristique de l'invention, un système de régulation (16) est associé à chaque réservoir auxiliaire (4) et ledit système de régulation (16) présente un capteur (17) pour détecter le niveau de produit et un clapet (18) pour réguler le flux d'air dans ledit réservoir auxiliaire (4) correspondant. Le système de régulation (16) est représenté sous forme simplifiée sur la figure 1. Grâce au système de régulation (16), il n'y a plus de débordement de produit dans ledit réservoir auxiliaire (4) puisque le clapet (18) est fermé lorsque le capteur (17) détecte le niveau prédéterminé de remplissage. La fermeture du clapet provoquant l'interruption du transport de produit vers ledit réservoir auxiliaire (4). Avec ce système de régulation (16), on garantit un fonctionnement correct de l'alimentation du réservoir auxiliaire (4) et ce quelle que soit sa position proche ou éloignée par rapport au réservoir principal (2). Le transport des graines vers ces différents réservoirs auxiliaires (4) se fait au travers d'un seul flux d'air. Le nombre de réservoirs auxiliaires (4) et par conséquent le nombre de distributeurs (3) n'est donc plus limité. Ce dispositif d'alimentation (1) pourra alimenter un grand nombre de réservoirs auxiliaires (4). A titre d'exemple, le semoir monograine pourra grâce au dispositif d'alimentation (1) selon l'invention alimenter au moins vingt réservoirs auxiliaires (4), quelle que soit leur position sur le châssis (13). Un tel châssis est alors de préférence repliable pour respecter le gabarit de transport lors des déplacements sur les routes.

L'interruption d'alimentation n'est plus tributaire de la forme du produit et de son aptitude à obstruer le dispositif d'échappement d'air (7). Un système de régulation (16) selon l'invention est implanté sur chaque réservoir auxiliaire (4). De cette manière, le dispositif d'alimentation (1) du réservoir principal (2) vers les réservoirs auxiliaires (4) est contrôlé et régulé. Les systèmes de régulation (16) sont indépendants les uns des autres. Les réservoirs auxiliaires (4) disposés au centre, proche du réservoir principal (2), sont ainsi protégés d'un éventuel débordement de niveau et la précision de semis est conservée. Le flux d'air pour l'approvisionnement des réservoirs auxiliaires (4) proches ou plus éloignés du réservoir principal (2) est suffisant pour un fonctionnement correct. Le nombre de réservoirs auxiliaires (4) à alimenter par un réservoir principal (2) n'est pas limité par le flux d'air. Ce dispositif de régulation (16) est adapté pour la distribution de tout produit. Que ce soient des grains lourds ou légers, l'alimentation des réservoirs auxiliaires (4) est optimale.

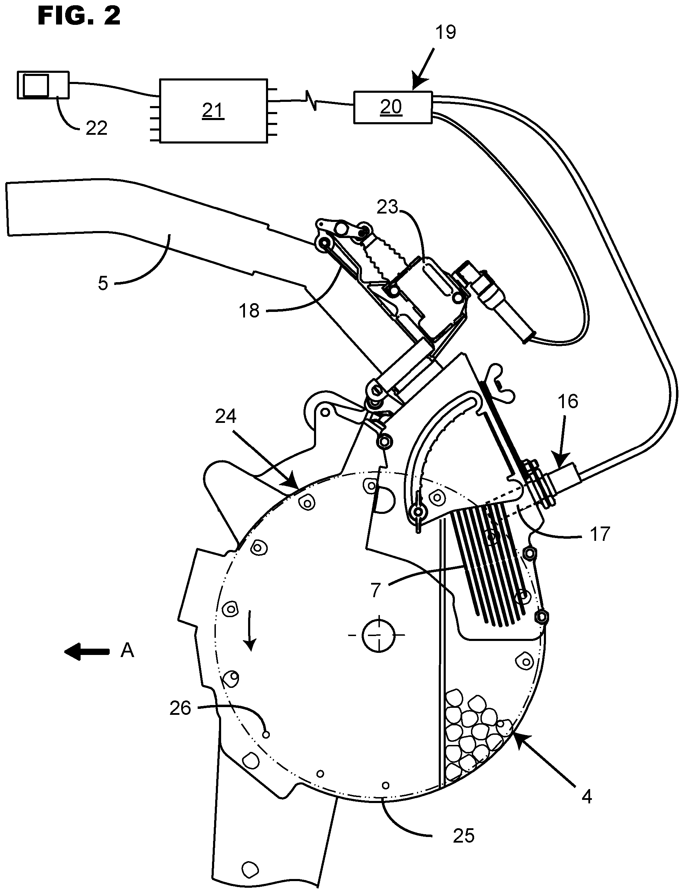

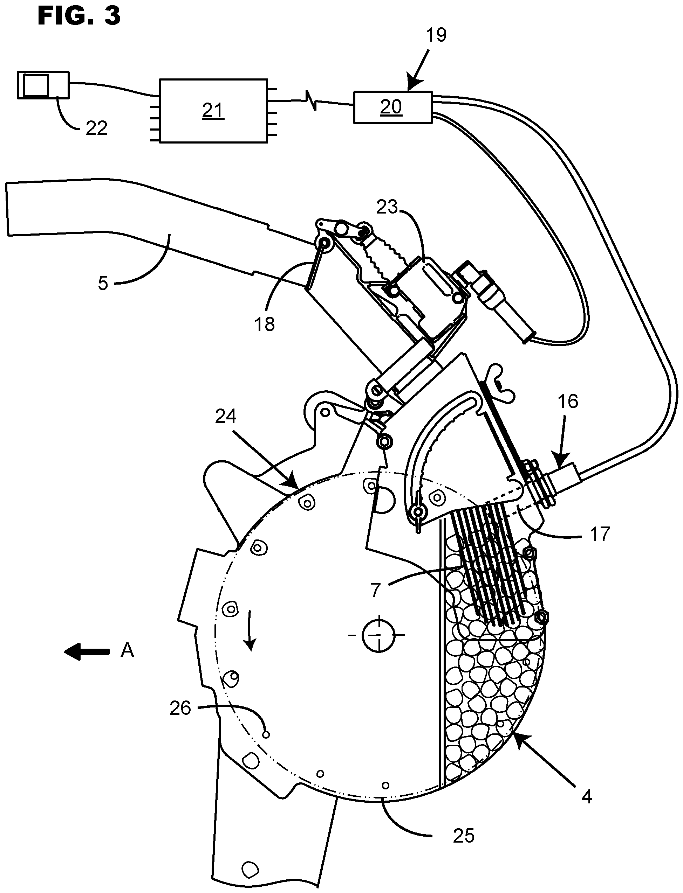

La figure 2 représente un réservoir auxiliaire (4) avec le conduit (5) permettant l'alimentation en produit. L'alimentation en produit se fait dans la partie supérieure du réservoir auxiliaire (4). Le système de régulation (16) s'étend entre le réservoir principal (2) et le réservoir auxiliaire (4) correspondant. Le système de régulation (16) des figures 2 et 3 présente en sus un élément de contrôle (19). Cet élément de contrôle (19) est destiné à recevoir des informations du capteur (17) et à commander le clapet (18) en conséquence. Le capteur (17) communique des informations quant au niveau de remplissage du réservoir auxiliaire (4). Il s'agit d'un système de régulation (16) électronique. Le capteur (17) s'étend sur le réservoir auxiliaire (4) alors que le clapet (18) s'étend dans le conduit (5) reliant ledit réservoir auxiliaire (4) au réservoir principal (2). Le clapet (18) présente une forme complémentaire du conduit (5). Pour un meilleur pivotement du clapet (18) dans le conduit (5), ce dernier présente un module de section rectangulaire. L'axe de l'articulation est sensiblement transversal à la direction du conduit (5). Dans une alternative, le module intercalé dans le conduit (5) présente une section en demi-cercle. La partie arrondie étant disposée vers le bas. Le clapet (18) présente une forme complémentaire et la base du demi-cercle réalise l'axe de l'articulation. Selon l'invention et telle que représentée sur la figure 2, le clapet (18) est disposé plus près du réservoir auxiliaire (4) que du réservoir principal (2).

Le clapet (18) est piloté en fonction du niveau de produit détecté dans le réservoir auxiliaire (4) correspondant par le capteur (17). D'une manière avantageuse, le capteur (17) détecte un niveau de remplissage du réservoir auxiliaire (4). Lorsqu'il détecte le niveau prédéterminé, il fournit un signal qui permet de piloter le clapet (18) présent dans le conduit (5) d'alimentation du réservoir auxiliaire (4) afin d'assurer une régulation. Le capteur (17) est un détecteur de proximité. Le capteur (17) permet de contrôler le remplissage du réservoir auxiliaire (4) sans contact physique avec le produit, par exemple les graines. Pour un autre type de capteur, l'extrémité du capteur doit être en contact avec le produit pour pouvoir détecter un niveau. Ainsi, la position du capteur (17) sur le réservoir auxiliaire (4) est ajustée en fonction du niveau de remplissage à détecter. Sa position dépend également du type de capteur utilisé.

D'une manière avantageuse et pour le bon fonctionnement du dispositif d'alimentation (1), le clapet (18) est monté de manière mobile dans ledit conduit (5) respectif. Le clapet (18) est amené à s'étendre selon deux positions. Dans une position, le clapet (18) autorise le passage du flux d'air dans le conduit (5) alors que dans l'autre position le clapet (18) empêche le passage de l'air et donc interrompt le transport de produit vers le réservoir auxiliaire (4) correspondant. Le montage du clapet (18) sur le conduit (5) est réalisé au moyen d'une articulation. Le clapet (18) est ouvert lorsque le niveau prédéterminé de produit dans ledit réservoir auxiliaire (4) correspondant n'est pas détecté par le capteur (17). L'articulation est positionnée de telle sorte que le clapet (18) ne soit pas un obstacle dans le conduit (5) pour le produit transporté par le flux d'air lorsqu'il est ouvert. Cette position est représentée à la figure 2. L'autre position du clapet (18) est illustrée sur la figure 3. Dans cette position, le clapet (18) est fermé puisque ledit capteur (17) a détecté le niveau prédéterminé de produit. Le niveau de remplissage à détecter peut varier en fonction du type de produit, de la position et de la sensibilité du capteur (17). Pour une meilleure compréhension, les graines ont été représentées sur les figures 2 à 4.

Le système de régulation (16) étant électronique, l'élément de contrôle (19) comprend un boîtier électronique (20) relié à une boîte de connexion (21) au travers d'un connecteur de signaux. Les informations relevées par l'intermédiaire du capteur (17) sont envoyées au boîtier électronique (20), ce dernier est capable de les interpréter. Le boîtier électronique (20), selon l'information reçue du capteur (17), pilote le clapet (18). L'information de position du clapet (18) peut être également transmise à l'utilisateur via une console électronique muni d'un afficheur (22) disposé dans le poste de conduite. Lorsque le capteur (17) a détecté le niveau de remplissage prédéterminé, le boîtier électronique (20) commande un actionneur (23) pour fermer le clapet (18). Dans l'exemple représenté, il s'agit d'un actionneur électrique associé à un dispositif roue et vis sans fin. Il transforme le mouvement de rotation du moteur en mouvement de translation de la vis. Une variante d'actionneur serait l'utilisation d'un vérin électrique.

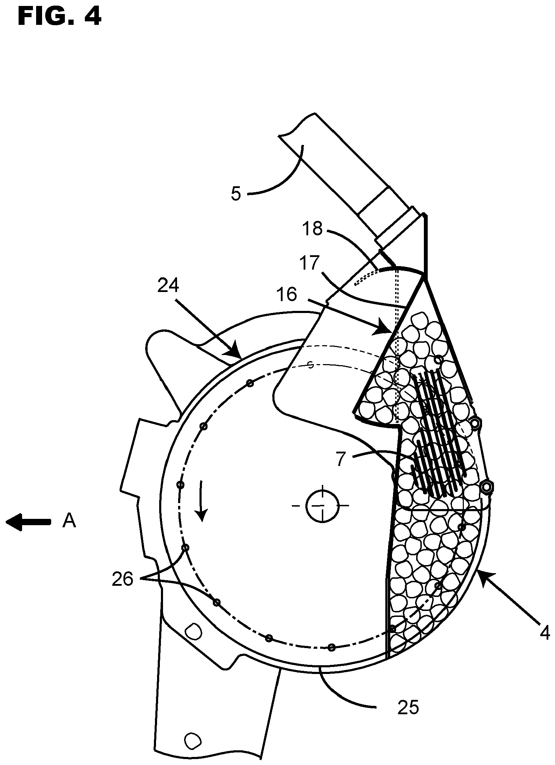

La figure 4 représente un autre exemple de réalisation d'un système de régulation (16), il s'agit d'un système de régulation mécanique. La figure 4 montre un réservoir auxiliaire avec un système de régulation qui permet de détecter les graines et de fermer un clapet lorsque le niveau prédéterminé est atteint. Ce système de régulation (16) présente un capteur (17) réalisé sous la forme d'une paroi qui se déplace en fonction de la pression des graines exercée contre la paroi. La paroi est articulée de manière à pouvoir pivoter. L'articulation est disposée de manière à ne pas gêner l'alimentation des graines. Elle s'étend dans le réservoir auxiliaire (4). Le clapet (18) s'étend dans la partie supérieure de la paroi verticale. D'une manière avantageuse, le clapet (18) est combiné au capteur (17), c'est-à-dire que l'orientation de la paroi donne la position du clapet (18). La représentation en traits continus correspond à une position fermée du clapet (18), le flux d'air et les graines alimentant le réservoir auxiliaire sont interrompus. Les graines sont représentées à titre indicatif et la paroi se trouve dans une position inclinée sous la pression des graines ce qui a entrainé la fermeture du clapet (18). L'autre position est représentée en traits discontinus. La paroi s'étend alors sensiblement verticalement et le clapet est ouvert pour permettre au flux d'air et aux graines d'alimenter le réservoir auxiliaire (4).

A la lumière des figures 2 à 4, on remarque qu'une distribution (24) est associée au réservoir auxiliaire (4). La distribution (24), représentée sur les figures 2 et 3, a pour rôle d'extraire une à une les graines du réservoir auxiliaire (4) et de les répartir à intervalle constant sur le rang via l'organe de mise en terre (14). L'extraction des graines est réalisée au moyen d'un disque (25) perforé. Les perforations (26) sont réparties à intervalles réguliers sur une circonférence voisine du pourtour du disque (25). La distribution (24) comporte un carter de forme générale cylindrique dans lequel est monté le disque (25). Le disque (25) est mis en rotation pour permettre la sélection de graines assistée par un flux d'air en dépression. Le flux d'air pour la sélection des graines est produit par une turbine (27) entraînée par la prise de force du tracteur. Le disque (25) est entraîné en rotation via des éléments d'entraînement en fonction de la vitesse d'avance du semoir. Ainsi, la vitesse de distribution est adaptée à la vitesse d'avancement du semoir (12) ce qui permet de semer les graines à des écartements constants. La vitesse d'avancement du semoir est donnée par une roue (28). La roue (28) est montée sur le châssis (13). Les graines sont alors guidées vers l'organe de mise en terre (14) qui crée un sillon à une profondeur déterminée pour y placer la graine et la recouvrir de terre. En adaptant le disque (25) et notamment les perforations à la taille et au poids des graines, la distribution (24) peut semer un grand nombre d'espèces.

Selon une variante non représentée, la distribution est un doseur volumétrique à cannelures ou à ergots. Un tel doseur est adapté au semis de céréales (blé, orge) ou pour l'engrais.

L'invention trouve son application dans le domaine du semoir, du distributeur de précision. L'invention concerne un semoir monograine pneumatique équipé d'un dispositif d'alimentation selon l'invention. La machine représentée sur la figure 1 est un semoir destiné à être porté par l'attelage trois points du tracteur. L'invention concerne également une machine qui est traînée par le tracteur.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Dispositif d'alimentation (1) pour semoir monograine via un flux d'air à partir d'un réservoir principal (2) contenant du produit, vers au moins un réservoir auxiliaire (4) en fonction de son taux de remplissage, chaque réservoir auxiliaire (4) étant relié audit réservoir principal (2) par un conduit (5) étanche respectif, chaque réservoir auxiliaire (4) étant associé à un distributeur (3), le nombre de réservoirs auxiliaires (4) correspondant au nombre de distributeurs (3) dudit semoir monograine, ***caractérisé en ce qu**'un* système de régulation (16) est associé à chaque réservoir auxiliaire (4) et que ledit système de régulation (16) présente un capteur (17) pour détecter le niveau de produit et un clapet (18), disposé plus près du réservoir auxiliaire (4) que du réservoir principal (2), pour réguler le flux d'air dans ledit réservoir auxiliaire (4) correspondant.

2. Dispositif d'alimentation selon la revendication 1, ***caractérisé en ce que*** ledit système de régulation (16) s'étend entre ledit réservoir principal (2) et ledit réservoir auxiliaire (4) correspondant.

3. Dispositif d'alimentation selon la revendication 1 ou 2, ***caractérisé en ce que*** ledit clapet (18) est piloté en fonction du niveau de produit détecté dans ledit réservoir auxiliaire (4) correspondant par ledit capteur (17).

4. Dispositif d'alimentation selon l'une quelconque des revendications 1 à 3, ***caractérisé en ce que*** ledit clapet (18) est mobile dans ledit conduit (5) respectif et est amené à s'étendre selon deux positions.

5. Dispositif d'alimentation selon l'une quelconque des revendications 1 à 4, ***caractérisé en ce que*** ledit clapet (18) est fermé lorsque ledit capteur (17) détecte un niveau prédéterminé de produit dans ledit réservoir auxiliaire (4) correspondant.

6. Dispositif d'alimentation selon l'une quelconque des revendications 1 à 4, ***caractérisé en ce que*** ledit clapet (18) est ouvert lorsqu'un niveau prédéterminé de produit dans ledit réservoir auxiliaire (4) correspondant n'est pas détecté par ledit capteur (17).

7. Dispositif d'alimentation selon l'une quelconque des revendications 1 à 6, ***caractérisé en ce qu**'une* distribution (24) et un organe de mise en terre (3) sont associés à chaque réservoir auxiliaire (4).

8. Dispositif d'alimentation selon l'une quelconque des revendications 1 à 7, ***caractérisé en ce que*** ledit système de régulation (16) est un système électronique et présente en sus un élément de contrôle (19).

9. Dispositif d'alimentation selon la revendication 8, ***caractérisé en ce que*** ledit capteur (17) s'étend sur ledit réservoir auxiliaire (4) et que ledit clapet (18) s'étend dans ledit conduit correspondant reliant ledit réservoir auxiliaire (4) correspondant audit réservoir principal (2).

10. Semoir monograine présentant un châssis (13), des distributeurs (3) de graines muni d'un organe de mise en terre (14) et un dispositif d'alimentation selon l'une quelconque des revendications 1 à 9.

## Patentansprüche

1. Versorgungsvorrichtung (1) für eine Einzelkornsämaschine über einen Luftstrom aus einem Hauptbehälter (2), der Produkte enthält, in mindestens einen Zusatzbehälter (4) in Abhängigkeit von dessen Füllrate, wobei jeder Zusatzbehälter (4) mit dem Hauptbehälter (2) durch eine jeweilige dichte Rohrleitung (5) verbunden ist, wobei jedem Zusatzbehälter (4) ein Verteiler (3) zugeordnet ist, wobei die Anzahl der Zusatzbehälter (4) der Anzahl von Verteilern (3) der Einzelkornsämaschine entspricht, ***dadurch gekennzeichnet, dass*** ein Regulierungssystem (16) jedem Zusatzbehälter (4) zugeordnet ist und dass das Regulierungssystem (16) einen Sensor (17) zum Erkennen des Produktfüllstands und ein Ventil (18), das näher dem Zusatzbehälter (4) als dem Hauptbehälter (2) angeordnet ist, zum Regulieren des Luftstroms im entsprechenden Zusatzbehälter (4) aufweist.

2. Versorgungsvorrichtung nach Anspruch 1, ***dadurch gekennzeichnet, dass*** sich das Regulierungssystem (16) zwischen dem Hauptbehälter (2) und dem entsprechenden Zusatzbehälter (4) erstreckt.

3. Versorgungsvorrichtung nach Anspruch 1 oder 2, ***dadurch gekennzeichnet, dass*** das Ventil (18) in Abhängigkeit vom Produktfüllstand gesteuert wird, der im entsprechenden Zusatzbehälter (4) vom Sensor (17) erkannt wird.

4. Versorgungsvorrichtung nach irgendeinem der Ansprüche 1 bis 3, ***dadurch gekennzeichnet, dass*** das Ventil (18) in der jeweiligen Rohrleitung (5) beweglich ist und sich gemäß zwei Positionen erstrecken soll.

5. Versorgungsvorrichtung nach irgendeinem der Ansprüche 1 bis 4, ***dadurch gekennzeichnet, dass*** das Ventil (18) geschlossen wird, sobald der Sensor (17) einen vorbestimmten Produktfüllstand im entsprechenden Zusatzbehälter (4) erkennt.

6. Versorgungsvorrichtung nach irgendeinem der Ansprüche 1 bis 4, ***dadurch gekennzeichnet, dass*** das Ventil (18) geöffnet wird, sobald ein vorbestimmter Produktfüllstand im entsprechenden Zusatzbehälter (4) vom Sensor (17) nicht erkannt wird.

7. Versorgungsvorrichtung nach irgendeinem der Ansprüche 1 bis 6, ***dadurch gekennzeichnet, dass*** ein Verteiler (24) und ein Pflanzelement (3) jedem Zusatzbehälter (4) zugeordnet sind.

8. Versorgungsvorrichtung nach irgendeinem der Ansprüche 1 bis 7, ***dadurch gekennzeichnet, dass*** das Regulierungssystem (16) ein elektronisches System ist und zudem ein Kontrollelement (19) aufweist.

9. Versorgungsvorrichtung nach Anspruch 8, ***dadurch gekennzeichnet, dass*** sich der Sensor (17) auf dem Zusatzbehälter (4) erstreckt und dass sich das Ventil (18) in der entsprechenden Rohrleitung erstreckt, die den entsprechenden Zusatzbehälter (4) mit dem Hauptbehälter (2) verbindet.

10. Einzelkornsämaschine, die einen Rahmen (13), Verteiler (3) von Saatgut, die mit einem Pflanzelement (14) ausgestattet sind, und eine Versorgungsvorrichtung nach irgendeinem der Ansprüche 1 bis 9 aufweist.

## Claims

1. Supply device (1) for a single seeder via a flow of air from a main reservoir (2) containing product to at least one auxiliary reservoir (4) depending on its filling rate, each auxiliary reservoir (4) being connected to said main reservoir (2) by a respective leak-tight duct (5), each auxiliary reservoir (4) being associated with a distributor (3), the number of auxiliary reservoirs (4) corresponding to the number of distributors (3) of said single seeder, ***characterized in* that** a regulating system (16) is associated with each auxiliary reservoir (4) and that said regulating system (16) has a sensor (17) for detecting the level of product and a valve (18), arranged closer to the auxiliary reservoir (4) than to the main reservoir (2), for regulating the flow of air in said corresponding auxiliary reservoir (4).

2. Supply device according to Claim 1, ***characterized in* that** said regulating system (16) extends between said main reservoir (2) and said corresponding auxiliary reservoir (4).

3. Supply device according to Claim 1 or 2, ***characterized in* that** said valve (18) is driven with regard to the level of product detected in said corresponding auxiliary reservoir (4) by said sensor (17).

4. Supply device according to any one of Claims 1 to 3, ***characterized in* that** said valve (18) is mobile in said respective duct (5) and is brought to extend according to two positions.

5. Supply device according to any one of Claims 1 to 4, ***characterized in* that** said valve (18) is closed when said sensor (17) detects a predetermined level of product in said corresponding auxiliary reservoir (4).

6. Supply device according to any one of Claims 1 to 4, ***characterized in* that** said valve (18) is open when the predetermined level of product in said corresponding auxiliary reservoir (4) is not detected by said sensor (17).

7. Supply device according to any one of Claims 1 to 6, ***characterized in* that** a distribution device (24) and a planting element (3) are associated with each auxiliary reservoir (4).

8. Supply device according to any one of Claims 1 to 7, ***characterized in* that** said regulating system (16) is an electronic system and has, in addition, a control element (19).

9. Supply device according to Claim 8, ***characterized in* that** said sensor (17) extends over said auxiliary reservoir (4) and that said valve (18) extends in said corresponding duct connecting said corresponding auxiliary reservoir (4) to said main reservoir (2).

10. Single seeder having a chassis (13), seed distributors (3) provided with a planting element (14) and a supply device according to any one of Claims 1 to 9.
